# EUROPEAN PATENT APPLICATION

(11) **EP 4 406 815 A1**
(43) Date of publication of application: **31.07.2024**
(21) Application number: 22872801.0
(22) Date of filing: 14.09.2022
(51) Int. Cl.: B62D 5/04

(54) **STEER-BY-WIRE STEERING SYSTEM**

(30) Priority: 22.09.2021 JP 2021153894
(71) Applicant: NTN Corporation, Osaka-shi, Osaka 530-0005 (JP)
(72) Inventor: SATO Koji, Iwata-shi, Shizuoka 438-8510 (JP)
(74) Representative: Grünecker Patent- und Rechtsanwälte PartG mbB
(86) International application number: PCT/JP2022/034404
(87) International publication number: WO 2023/048047

(57) **Abstract**

A steer-by-wire type steering system is provided in which a steering actuator changes the direction of steered parts based on the operation amount of a steering wheel detected by a steering sensor; in which when the direction of the steered parts reaches the stroke end, the driver can reliably perceive this situation via the steering wheel; and in which even while no electric power is being supplied, the steering wheel can be locked. The steer-by-wire type steering system includes a shaft (4) coupled to the steering wheel so as to rotate in unison with the steering wheel; an outer ring (21) having an inner periphery disposed around the shaft (4); engagement elements (24) disposed between the shaft (4) and the inner periphery of the outer ring (21); a cage (25) retaining the engagement elements (24), and disposed to be circumferentially movable between an engagement position where the engagement elements (24) are engaged with the shaft (4) and the inner periphery of the outer ring (21), and a disengagement position where the engagement elements (24) are disengaged from the shaft (4) and the inner periphery of the outer ring (21); a centering spring (26) that elastically retains the cage (25) at the disengagement position, and that is rotationally fixed to the shaft (4) and the cage (25) so as to rotate in unison with the shaft (4); and a non-excited operation type electromagnetic brake (27) that brakes the cage (25).

## Description

### TECHNICAL FIELD

The present invention relates to a steer-by-wire type steering system that conducts steering with its steering wheel mechanically separated.

### BACKGROUND ART

Steer-by-wire type steering systems are known as steering systems that change the direction of steered parts such as steered wheels (generally front wheels) of a vehicle, or a steered part such as a rudder of a ship according to turning operation of the steering wheel by the driver.

Such a steer-by-wire type steering system includes a steering sensor that detects the operation amount of the steering wheel, and a steering actuator disposed to be mechanically separated from the steering wheel. The steering actuator operates and changes the direction of the steered part(s), according to the operation amount of the steering wheel detected by the steering sensor.

In such a steer-by-wire type steering system, the operation amount of the steering wheel by the driver is temporarily converted into an electric signal, and the behavior of the steering actuator can be controlled based on the electric signal. Therefore, it is possible to optimize the corresponding relationship between the operation amount of the steering wheel and the behavior amount of the steering actuator, according to the driving condition of the vehicle or the ship, for example, adjust the amount of a change in the direction of the steered part(s) when the steering wheel is operated, according to the movement speed of the vehicle or the ship.

However, because, in such a steer-by-wire type steering system, the steering wheel, which is turned by the driver, is mechanically separated from the steering actuator for changing the direction of the steered part(s), even when the direction of the steered part(s) reaches its movement limit (stroke end), the driver can further turn the steering wheel. Therefore, a steer-by-wire type steering system for a vehicle is proposed which is configured such that when the direction of steered parts reaches the stroke end, the driver can perceive this situation via the steering wheel (the below-identified Patent Document 1).

The steer-by-wire type steering system for a vehicle disclosed in Patent Document 1 includes a reaction force motor that applies to the steering wheel a steering reaction force calculated based on the vehicle speed, the operation amount of the steering wheel, etc.; and a reaction force controller that controls the reaction force motor. When the direction of steered wheels reaches the stroke end, the reaction force controller corrects and increases the magnitude of the steering reaction force generated by the reaction force motor. This enables the driver to perceive, via the steering wheel, that the direction of the steered wheels has reached the stroke end.

### PRIOR ART DOCUMENT

### PATENT DOCUMENT

Patent Document 1: International Publication WO2020/195226

### SUMMARY OF THE INVENTION

### PROBLEMS TO BE SOLVED BY THE INVENTION

If, as in Patent Document 1, when the direction of the steered wheels reaches the stroke end, the magnitude of the steering reaction force generated by the reaction force motor is corrected and increased, this complicates the control of the reaction force motor. Also, since the steering reaction force of the steering wheel is simply increased, and rotation of the steering wheel is not prevented, the driver may not be able to perceive that the direction of the steered wheels has reached the stroke end, and thus may further turn the steering wheel.

Also, when the driver leaves the vehicle for a long time, in order to prevent, e.g., the vehicle from being stolen, it is preferable to lock the steering wheel so as to prevent rotation of the steering wheel. However, in such a case, normally, since electric power is not supplied to the reaction force motor, the steering wheel cannot be locked by the steering reaction force. Also, even if electric power is continuously supplied to the reaction force motor, it is difficult to apply to the steering wheel a large steering reaction force that can lock the steering wheel.

Therefore, it is an object of the present invention to provide a steer-by-wire type steering system in which when the direction of steered parts reaches the stroke end, the driver can reliably perceive this situation via the steering wheel; and in which even while no electric power is being supplied, the steering wheel can be locked.

### MEANS FOR SOLVING THE PROBLEMS

In order to achieve the above object, the present invention provides a steer-by-wire type steering system comprising: a steering wheel; a steering sensor configured to detect an operation amount of the steering wheel; and a steering actuator configured to change a direction of at least one steered part based on the operation amount of the steering wheel detected by the steering sensor, characterized in that the steer-by-wire type steering system further comprises: a shaft coupled to the steering wheel so as to rotate in unison with the steering wheel; an outer ring having an inner periphery disposed around the shaft; engagement elements disposed between the shaft and the inner periphery of the outer ring; a cage retaining the engagement elements, and disposed to be circumferentially movable between an engagement position where the engagement elements are engaged with the shaft and the inner periphery of the outer ring, and a disengagement position where the engagement elements are disengaged from the shaft and the inner periphery of the outer ring; a centering spring that elastically retains the cage at the disengagement position, and that is rotationally fixed to the shaft and the cage so as to rotate in unison with the shaft; and a non-excited operation type electromagnetic brake configured to brake the cage.

With this arrangement, when the non-excited operation type electromagnetic brake is switched to an excited state, the cage is not braked. When, in this state, the shaft rotates, the centering spring, which is rotationally fixed to the shaft so as to rotate in unison with the shaft, transmits the rotational force of the shaft to the cage, and retains the cage at the disengagement position relative to the shaft, so that the engagement elements cannot engage with the shaft and the inner periphery of the outer ring. That is, when the electromagnetic brake is in the excited state, rotation of the steering wheel is allowed. On the other hand, when the non-excited operation type electromagnetic brake is switched to a non-excited state, the cage is braked. When, in this state, the steering wheel is turned, since the electromagnetic brake brakes the cage to which the rotational force of the shaft is transmitted from the centering spring, the shaft rotates relative to the cage. Due to this relative rotation, when the cage moving circumferentially relative to the shaft reaches the engagement position against the centering spring, the engagement elements are engaged with the shaft and the inner periphery of the outer ring, thereby reliably preventing further rotation of the shaft. When the electromagnetic brake is switched from the non-excited state to the excited state, the cage is returned to the disengagement position by the elastic restoring force of the centering spring. Thus, by switching the electromagnetic brake from the excited state to the non-excited state, it is possible to reliably prevent rotation of the steering wheel beyond the circumferential movement range of the cage between the engagement position and the disengagement position. Also, it is possible to make the driver reliably perceive, via the steering wheel, that the direction of the steered wheels has reached the stroke end. Also, when the electromagnetic brake is in the non-excited state, the rolling elements engage with the shaft and the inner periphery of the outer ring by turning of the steering wheel 1, thereby reliably blocking rotation of the shaft. Therefore, even while no electric power is being supplied, the steering wheel can be locked.

For example, the non-excited operation type electromagnetic brake preferably comprises: a friction member rotationally fixed to the cage, and disposed to be axially movable relative to the cage; a friction surface portion that is axially opposed to the friction member, and that is stationary relative to the shaft; an electromagnet; an armature axially opposed to the electromagnet; and an actuation spring disposed such that when the electromagnet is not excited, the actuation spring biases the friction member so as to be pressed against the friction surface portion, and such that when the electromagnet is excited, pressing of the friction member weakens according to axial movement of the armature attracted to the electromagnet. With this arrangement, in the non-excited state in which the electromagnet is not energized, the friction member is axially pressed against the friction surface portion by the biasing force of the actuation spring so as to apply actuation pressure between the friction member and the friction surface portion, thereby making it possible to brake the cage, and circumferentially move the cage relative to the shaft. On the other hand, when the electromagnet is switched from the non-excited state to the excited state, the pressing of the friction member is weakened by axial movement of the armature attracted, so that the braking of the cage by the friction surface portion and the friction member is released.

The actuation spring is preferably disposed such that when the electromagnet is not excited, the actuation spring supports the armature at a position axially away from the electromagnet, and biases, via the armature, the friction member toward the friction surface portion. With this arrangement, when the electromagnet is not excited, the friction member is pressed against the friction surface portion by the biasing force of the actuation spring via the armature, and a predetermined magnetic gap can be generated between the armature and the electromagnet by the support of the actuation spring. Also, when the electromagnet is switched from the excited state to the non-excited state, the armature can be returned to the position of the predetermined magnetic gap by the elastic restoring force of the actuation spring.

The friction surface portion is preferably formed on an end surface of the outer ring. With this arrangement, it is not necessary to provide the friction surface portion as a part exclusively for braking. Therefore, it is possible to reduce the cost of the non-excited operation type electromagnetic brake.

It is preferable that the steer-by-wire type steering system further comprises a tubular brake case in which the outer ring and the non-excited operation type electromagnetic brake are received, the brake case is a non-magnetic member provided separately from the outer ring, and the outer ring is rotationally fixed to the brake case. With this arrangement, when the non-excited operation type electromagnetic brake is switched to the excited state, it is possible to prevent the magnetic flux generated from the non-excited operation type electromagnetic brake from leaking to the brake case.

. It is preferable that the steer-by-wire type steering system further comprises a tubular brake case in which the non-excited operation type electromagnetic brake is received, and the outer ring is formed integrally with the brake case. With this arrangement, it is possible to omit the step of axially positioning the outer ring relative to the brake case, and the step of rotationally fixing the outer ring to the brake case.

It is preferable that the steer-by-wire type steering system further comprises a reaction force motor for applying a steering reaction force to the steering wheel, the at least one steered part comprises a pair of right and left steered wheels, and the outer ring, the engagement elements, the cage and the non-excited operation type electromagnetic brake are located between the steering wheel and the reaction force motor, or located on a side of the reaction force motor axially opposite from the steering wheel. With this arrangement, as a steer-by-wire type steering system for a vehicle, this steering system enables the driver to reliably perceive, via the steering wheel, that the direction of the steered wheels has reached the stroke end. Also in this steering system, the steering wheel is locked when the driver parks and leaves the vehicle, thereby preventing the vehicle from being stolen.

### EFFECTS OF THE INVENTION

Since the steer-by-wire type steering system of the present invention has the above-described structure, when the direction of the at least steered part reaches the stroke end, the driver can reliably perceive this situation via the steering wheel. Also, even while no electric power is being supplied, the steering wheel can be locked.

### BRIEF DESCRIPTION OF THE DRAWINGS

Fig. 1 is a sectional view illustrating a non-excited operation type electromagnetic brake disposed in a steer-by-wire type steering system according to a first embodiment of the present invention, and the vicinity of the electromagnetic brake.
Fig. 2 is a view schematically illustrating the steer-by-wire type steering system according to the first embodiment.
Fig. 3 is a sectional view taken along line III-III of Fig. 1.
Fig. 4 is an exploded perspective view illustrating the outer ring of Fig. 1 and the vicinity thereof.
Fig. 5 is a sectional view taken along line V-V of Fig. 1.
Fig. 6 is an enlarged view illustrating the armature of Fig. 1 and the vicinity thereof.
Fig. 7 is a schematic view illustrating a modified arrangement of the brake unit of Fig. 2.
Fig. 8 is a sectional view illustrating a non-excited operation type electromagnetic brake according to a second embodiment of the present invention, and the vicinity of the electromagnetic brake.

### BEST MODE FOR CARRYING OUT THE INVENTION

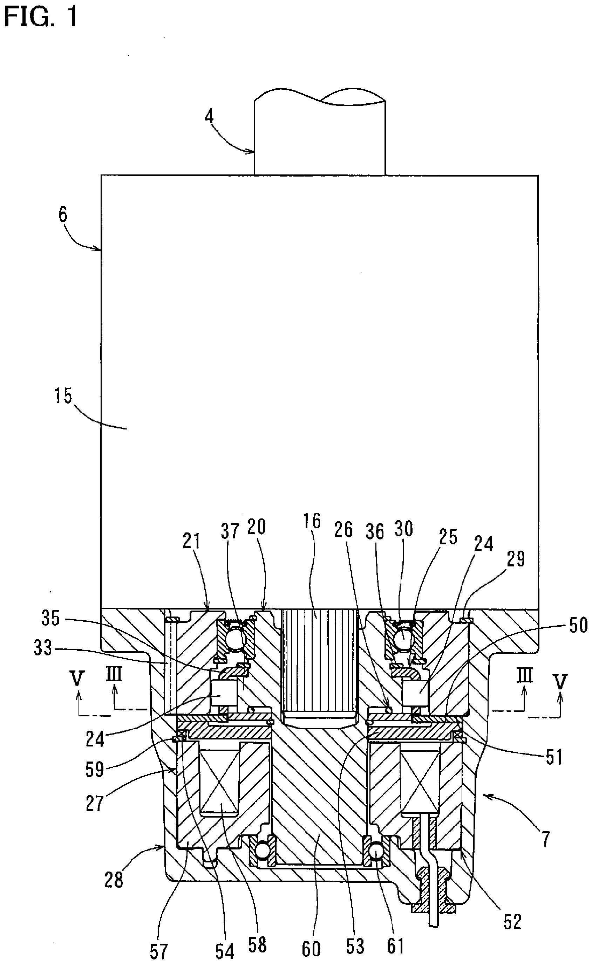

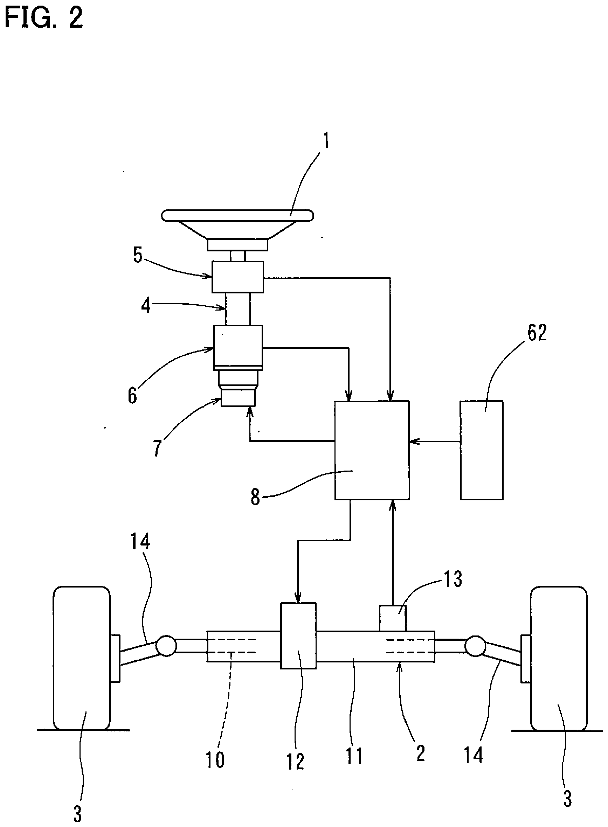

Figs. 1 and 2 show, as an example of the present invention, a steer-by-wire type steering system according to the first embodiment of the present invention (hereinafter simply referred to as the "steering system").

This steering system is configured such that the operation amount of a steering wheel 1 by the driver is converted into an electric signal, and a steering actuator 2 is controlled based on the electric signal, thereby changing the direction of a pair of right and left steered wheels 3 as steered parts.

This steering system includes a steering wheel 1 steered by the driver; a shaft 4 coupled to the steering wheel 1; a steering sensor 5 that detects the operation amount of the steering wheel 1; a reaction force motor 6 that applies a steering reaction force to the steering wheel 1; a brake unit 7 that blocks rotation of the steering wheel 1 when in a non-excited state, and that allows rotation of the steering wheel 1 when in an excited state ; a steering actuator 2 disposed to be mechanically separated from the steering wheel 1; and a control unit 8.

The shaft 4 is coupled to the steering wheel 1 so as to rotate in unison with the steering wheel 1 when the steering wheel 1 is steered. The steering sensor 5 is mounted to the shaft 4. The steering sensor 5 may be, for example, a steering angle sensor that detects the steering angle of the steering wheel 1, or a steering torque sensor that detects the steering torque applied to the steering wheel 1 by the driver.

The reaction force motor 6 is an electric motor that generates rotational torque due to energization. The reaction force motor 6 is coupled to an end of the shaft 4. The reaction force motor 6 applies rotational torque to the shaft 4 such that a steering reaction force is applied to the steering wheel 1 through the shaft 4.

The steering actuator 2 includes a steering shaft 10, a steering shaft housing 11, a steering motor 12 that moves the steering shaft 10 in the right- and-left direction of the vehicle, and a steering sensor 13 that detects the position of the steering shaft 10. The steering shaft 10 is supported by the steering shaft housing 11 so as to be movable in the right-to-left direction of the vehicle. The steering shaft housing 11 receives the central portion of the steering shaft 10 such that the right and left ends of the steering shaft 10 protrude beyond the steering shaft housing 11.

The steering motor 12 and the steering sensor 13 are mounted to the steering shaft housing 11. A motion converting mechanism (not shown) is mounted between the steering motor 12 and the steering shaft 10 so as to convert the rotation output from the steering motor 12, into the linear motion of the steering shaft 10. The right and left ends of the steering shaft 10 are coupled, respectively, to the right and left steered wheels 3 via tie rods 14 such that when the steering shaft 10 axially moves, the direction of the right and left steered wheels 3 changes accordingly.

The reaction force motor 6 includes a motor case 15, and a motor shaft 16 protruding beyond the motor case 15 toward the side opposite/remote from the steering wheel 1 (lower side in the relevant drawing). The motor shaft 16 is rotatably supported by a rolling bearing (not shown) mounted in the motor case 15. The motor shaft 16 is a constituent part of the shaft 4, and is coupled to a shaft portion of the shaft 4 on the side of the steering column so as to rotate in unison with the steering wheel 1. The motor case 15 is fixed to the vehicle body (not shown) so as to be non-rotatable.

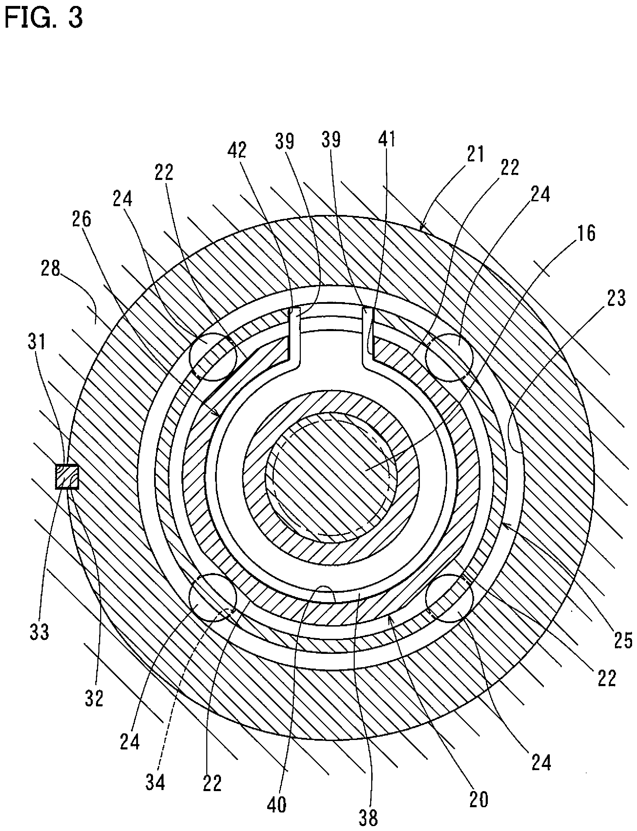

The brake unit 7 includes an inner ring 20 coupled to the motor shaft 16; an outer ring 21 having an inner periphery disposed around the inner ring 20; a plurality of cam surfaces 22 (see Fig. 3) formed on the outer periphery of the inner ring 20; a cylindrical surface 23 formed on the inner periphery of the outer ring 21; engagement elements 24 disposed between the respective cam surfaces 22 and the cylindrical surface 23; a cage 25 retaining the engagement elements 24; a centering spring 26 rotationally fixed to the inner ring 20 and the cage 25; a non-excited operation type electromagnetic brake 27 that brakes the cage 25; and a brake case 28 coupled to the motor case 15.

The inner ring 20 shown in Figs. 1 and 3 is a constituent part of the shaft 4, and spline-fitted on the outer periphery of the motor shaft 16. Due to this spline fitting, the motor shaft 16 is coupled in a play-free state to the inner ring 20 so as not to rotate relative to the inner ring 20 at all.

The entire inner ring 20 is integrally formed by forging. The inner ring 20 and the motor shaft 16 are formed as separate members, because this facilitates high-precision formation of the cam surfaces 22 by forging. As shown in Figs. 1 and 2, the shaft 4 may be constituted by coupling together a plurality of members such as the inner ring 20, the motor shaft 16 and a steering shaft directly coupled to the steering wheel 1. Also, the shaft 4 may be constituted by, e.g., integrally forming the motor shaft and the steering shaft, or integrally forming the motor shaft and the inner ring. Thus, the shaft 4 may be suitably constituted by a single member or a plurality of members.

The outer ring 21 and the brake case 28 shown in Fig. 1 are formed as separate members. The brake case 28 is a tubular member in which constituent parts of the brake unit 7 (the inner ring 20, the engagement elements 24, the cage 25, the non-excited operation type electromagnetic brake 27, etc.) are received all together. The brake case 28 is formed of a non-magnetic material (such as an aluminum alloy or copper). A radially outwardly extending flange is formed at one axial end of the brake case 28, and the flange is fixed to the axial end surface of the motor case 15 by bolts (not shown).

On the other hand, the outer ring 21 is made of a steel material. The outer ring 21 is fitted in the tubular brake case 28, and is prevented from being pulled out of the brake case 28 by a snap ring 29 mounted to the inner periphery of the brake case 28. A bearing 30 for rotatably supporting the inner ring 20 is disposed between the inner periphery of the outer ring 21 and the outer periphery of the inner ring 20.

As shown in Figs. 1 and 3, a common key member 33 is fitted in a key groove 31 formed in the inner periphery of the brake case 28 and a key groove 32 formed in the outer periphery of the outer ring 21. The outer ring 21 is rotationally fixed to the brake case 28 by the key member 33.

The cam surfaces 22 of the inner ring 20 on its outer periphery shown in Fig. 3 are radially opposed to the cylindrical surface 23 of the outer ring 21 on its inner periphery. A wedge-shaped space which gradually narrows from its circumferential center toward both circumferential ends thereof is defined between each cam surface 22 and the cylindrical surface 23.

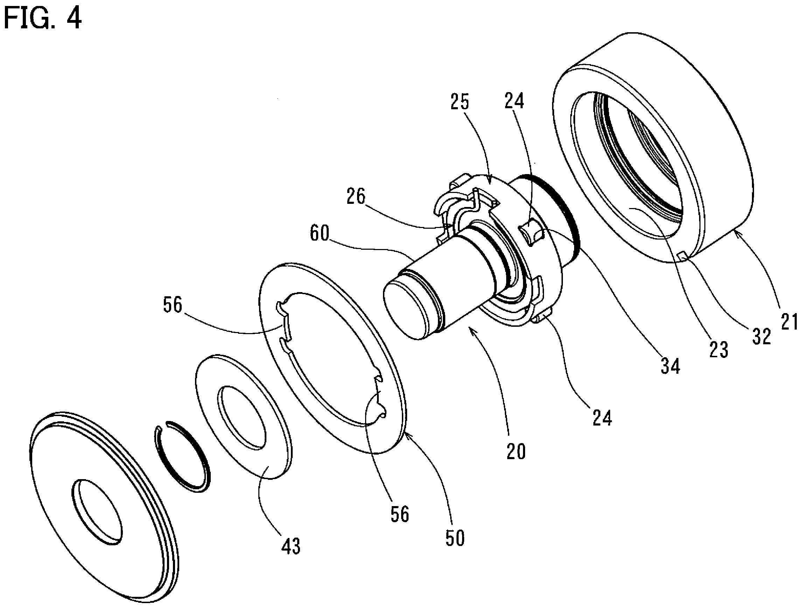

As shown in Figs. 3 and 4, the cage 25 is an annular member having a plurality of pockets 34 radially extending through the cage 25 and circumferentially spaced apart from each other. The engagement elements 24 are received in the respective pockets 34.

As shown in Fig. 1, the cage 25 includes an inwardly extending flange 35. The flange 35 is located between a snap ring 36 attached to the outer periphery of the inner ring 20 and a shoulder 37 formed on the outer periphery of the inner ring 20. Axial movement of the cage 25 is restricted by the flange 35, the snap ring 36 and the shoulder 37.

The engagement elements 24 are rollers each having a circular rolling surface extending around the center axis of the engagement element.

The cage 25 is supported to be circumferentially movable relative to the inner ring 20, between an engagement position where by circumferentially moving the engagement elements 24 shown in Fig. 3 from the circumferential central positions of the respective cam surfaces 22, the engagement elements 24 are engaged with the respective cam surfaces 22 and the cylindrical surface 23, and a disengagement position where by moving the engagement elements 24 to the circumferential central positions of the respective cam surfaces 22, the engagement elements 24 are disengaged from the respective cam surfaces 22 and the cylindrical surface 23.

The centering spring 26 is an elastic member for elastically retaining the cage 25 at the disengagement position, and also for transmitting the rotational force of the shaft 4 to the cage 25. As shown in Fig. 3, the centering spring 26 comprises a C-shaped annular portion 38 formed by bending a steel wire into a C shape, and a pair of extended portions 39 extending radially outwardly from both ends of the C-shaped annular portion 38, respectively.

A recess 40 and a radial groove 41 for retaining the centering spring 26 are formed in the axial end surface of the inner ring 20. The recess 40 is a circumferentially extending circular arc-shaped groove. The radial groove 41 extends radially outwardly through the cage 25 from the recess 40 to the outer periphery of the inner ring 20.

The C-shaped annular portion 38 of the centering spring 26 is fitted in the recess 40. The extended portions 39 are inserted in the radial groove 41. The extended portions 39 protrude beyond the radially outer end of the radial groove 41, and the portions of the extended portions 39 protruding beyond the radial groove 41 are inserted in a cage groove 42 formed in the cage 25. The radial groove 41 and the cage groove 42 have the same circumferential width. The extended portions 39 are in contact with the groove inner surface portions of the radial groove 41 at both circumferential ends thereof, and the groove inner surface portions of the cage groove 42 at both circumferential ends thereof. Thus, the centering spring 26 is rotationally fixed to the inner ring 20 so as to rotate in unison with the inner ring 20, and also is rotationally fixed to the cage 25, so that the cage 25 can be elastically retained at the disengagement position by the circumferential forces that act on the contact portions of the extended portions 39 and the cage groove 42.

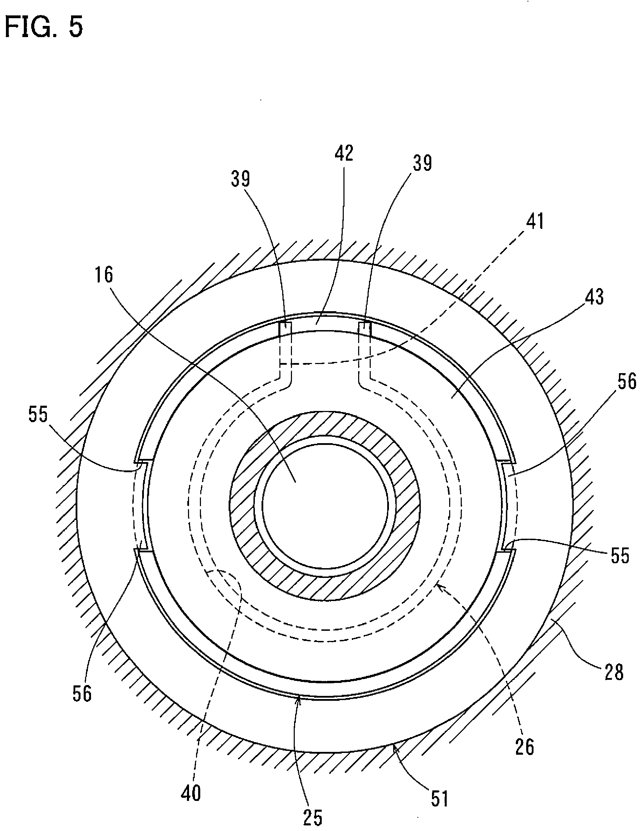

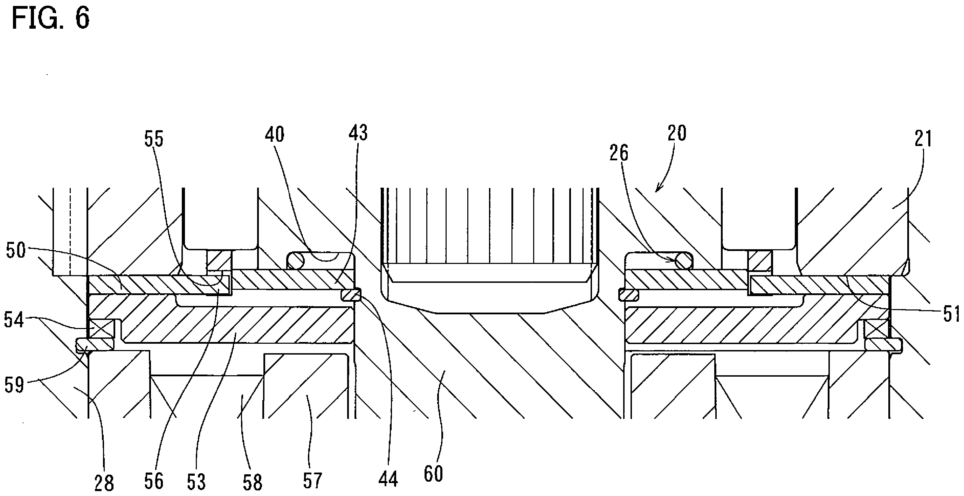

As shown in Figs. 5 and 6, the centering spring 26 is axially restricted by an annular cover member 43 fitted on the outer periphery of the inner ring 20 so as not to move out of the recess 40 and the radial groove 41. Axial movement of the cover member 43 is restricted by a snap ring 44 mounted to the outer periphery of the inner ring 20, and the axial end surface of the inner ring 20. Instead of the cover member, a flange for preventing separation of the centering spring may be formed on the cage.

As shown in Figs. 1 and 6, the non-excited operation type electromagnetic brake 27 includes a friction member 50 axially movably disposed between the outer periphery of the cage 25 and the inner periphery of the brake case 28; a friction surface portion 51 formed on the end surface of the outer ring 21; an electromagnet 52 fixed to the brake case 28; an armature 53 axially opposed to the electromagnet 52; and an actuation spring 54 for applying actuation pressure between the friction member 50 and the friction surface portion 51.

As shown in Figs. 4 to 6, the friction member 50 is a disk-shaped member which is, at its outer periphery, axially slidable on the inner periphery of the brake case 28, and which is, at its inner periphery, axially slidable on the outer periphery of the cage 25. The cage 25 has engagement recesses 55. The friction member 50 has, on its inner periphery, engagement protrusions 56 circumferentially engaged in the respective engagement recesses 55 of the cage 25. Thus, the friction member 50 is rotationally fixed to the cage 25 so as to circumferentially move in unison with the cage 25, and is disposed to be axially movable relative to the cage 25.

As shown in Fig. 6, the friction surface portion 51 is formed on the end surface of the outer ring 21 axially opposed to the friction member 50. Because the outer ring 21 is fixed to the brake case 28, which is stationary, the friction surface portion 51 is also a fixed portion which is stationary relative to the inner ring 20. When the friction surface portion 51 axially receives the friction member 50 against the biasing force generated by the actuation spring 54, and actuation pressure corresponding to the biasing force of the actuation spring 54 acts between the friction surface portion 51 and the friction member 50, rotation of the friction member 50 is braked.

As shown in Figs. 1 and 6, the electromagnet 52 includes an annular field core 57 having a C-shaped cross section axially opening toward the armature 53; and a solenoid coil 58 wound around the field core 57. The electromagnet 52 is mounted in the brake case 28 so as to move neither axially nor circumferentially. A snap ring 59 for restricting axial movement of the electromagnet 52 is attached to the inner periphery of the brake case 28.

The brake case 28 is formed with a through hole through which a lead wire for supplying electric power to the solenoid coil 58 passes, and a grommet made of rubber is mounted to fill the gap between the lead wire and the inner periphery of the through hole.

The armature 53 is axially movable between the inner ring 20 and the inner periphery of the brake case 28, and between the friction member 50 and the electromagnet 52. The armature 53 is a disk-shaped member made of a magnetic material (such as iron or silicon steel). The armature 53 is axially movably supported by the outer periphery of an inner ring shaft portion 60 which is integral with the inner ring 20. A bearing 61 for rotatably supporting the inner ring 20 is disposed between the inner ring shaft portion 60 and the inner periphery of the brake case 28.

The actuation spring 54 is an annular spring such as a wave washer. As shown in Fig. 6, the actuation spring 54 is disposed between the end surface of the armature 53 opposite/remote from the friction member 50, the snap ring 59 and the inner periphery of the brake case 28. When the electromagnet 52 is not excited, the actuation spring 54 supports the armature 53 at a position axially away from the electromagnet 52, and biases the friction member 50 toward the friction surface portion 51 via the armature 53. This biasing force presses the friction member 50 against the friction surface portion 51 so as to apply actuation pressure to the friction contact portions between the friction member 50 and the friction surface portion 51, thereby braking rotation of the cage 25. When the electromagnet 52 is switched from its non-excited state to its excited state, in which a magnetic circuit passing through the field core 57 and the armature 53 is generated, the electromagnet 52 axially attracts the armature 53 to the field core 57 against the actuation spring 54. At this time, since the armature 53 moves in the direction axially away from the friction surface portion 51 while axially compressing the actuation spring 54, the pressing force of the friction member 50 relative to the friction surface portion 51 weakens according to this axial movement of the armature 53, and it eventually becomes impossible to brake rotation of the cage 25.

The actuation spring 54 may be disposed between the end surface of the field core 57 and the armature 53. Also, instead of the actuation spring, non-annular springs such as compression coil springs may be disposed at plural circumferential portions so as to be spaced apart from each other.

In an excited state in which the electromagnet 52 of the non-excited operation type electromagnetic brake 27 is energized, the brake unit 7 shown in Fig. 1 is in an idling state in which the inner ring 20 is freely rotatable in both of normal and reverse rotational directions relative to the outer ring 21. That is, in this state, the armature 53 is attracted and stuck to the electromagnet 52 against the actuation spring 54, and thus the cage 25 cannot be braked by the friction member 50 and the friction surface portion 51. At this time, irrespective of the rotational direction (normal or reverse rotational direction) of the inner ring 20, the cage 25 is co-rotated by the centering spring 26 rotating in unison with the inner ring 20, and is retained at the disengagement position by the elastic restoring force of the centering spring 26. Therefore, the engagement elements 24, which are retained by the cage 25, are out of engagement with the cam surfaces 22 of the inner ring 20 on its outer periphery and the cylindrical surface 23 of the outer ring 21 on its inner periphery, and thus the inner ring 20 and the motor shaft 16 are freely rotatable in both of the normal and reverse directions.

On the other hand, in a non-excited state in which the electromagnet 52 of the non-excited operation type electromagnetic brake 27 is not energized, the brake unit 7 is in a locked state in which the inner ring 20 is rotatable in neither of the normal and reverse directions relative to the outer ring 21. That is, when the electromagnet 52 is switched to the non-excited state by de-energizing the electromagnet 52, the armature 53 is moved away from the electromagnet 52 by the elastic restoring force of the actuation spring 54, and the friction member 50 axially pushed by the armature 53 is pressed against the friction surface portion 51 of the outer ring 21, thereby creating a friction contact state, and also a predetermined magnetic gap is created between the armature 53 and the electromagnet 52. When, in this state, the inner ring 20 rotates in one of the normal and reverse directions, the rotational force of the shaft 4 is transmitted to the cage 25 from the centering spring 26 rotating in unison with the inner ring 20. However, because the braking force due to the frictional contact between the friction member 50, which is rotationally fixed to the cage 25, and the friction surface portion 51, which is stationary, acts on the cage 25 via the friction member 50, the inner ring 20 rotates relative to the cage 25. As a result, since the cage 25 moving circumferentially relative to the inner ring 20 circumferentially pushes and elastically deflects, at the inner surface of its cage groove 42, one of the two extended portions 39 of the centering spring 26, the cage 25 circumferentially moves from the disengagement position toward the engagement position against the centering spring 26. When this circumferential movement reaches a predetermined angle amount, the cage 25 reaches the engagement position, and the engagement elements 24, which are retained by the cage 25, engage with the respective cam surfaces 22 of the inner ring 20 on its outer periphery and the cylindrical surface 23 of the outer ring 21 on its inner periphery. Therefore, rotation of the inner ring 20 is blocked, and rotation of the motor shaft 16, which is coupled to the inner ring 20, is blocked.

The control unit 8 shown in Fig. 2 controls the reaction force motor 6, the brake unit 7, and the steering motor 12. An external sensor 62, the steering sensor 5 and the steering sensor 13 are electrically connected to the input side of the control unit 8. The external sensor 62 is, for example, a vehicle speed sensor that detects the travel speed of a vehicle. The reaction force motor 6, the brake unit 7 and the steering actuator 2 are electrically connected to the output side of the control unit 8.

The control unit 8 actuates the steering motor 12 to change the direction of the right and left steered wheels 3, according to the operation amount of the steering wheel 1 detected by the steering sensor 5, and the travel conditions of the vehicle (such as the vehicle speed) detected by the external sensor 62. Also at this time, the control unit 8 actuates the reaction force motor 6 such that a steering reaction force of magnitude corresponding to the operation amount of the steering wheel 1 and the travel conditions of the vehicle is generated.

Moreover, the control unit 8 determines whether or not the direction of the steered wheels 3 has reached the stroke end, based on the position of the steering shaft 10 detected by the steering sensor 13. When the control unit 8 determines that the direction of the steered wheels 3 has not reached the stroke end, the electromagnet 52 shown in Fig. 1 is energized such that the non-excited operation type electromagnetic brake 27 is in its excited state, thereby keeping the brake unit 7 in the above idling state. On the other hand, when the control unit 8 determines that the direction of the steered wheels 3 shown in Fig. 2 has reached the stroke end, the electromagnet 52 shown in Fig. 1 is de-energized such that the non-excited operation type electromagnetic brake 27 is in its non-excited state, thereby keeping the brake unit 7 in the above locked state.

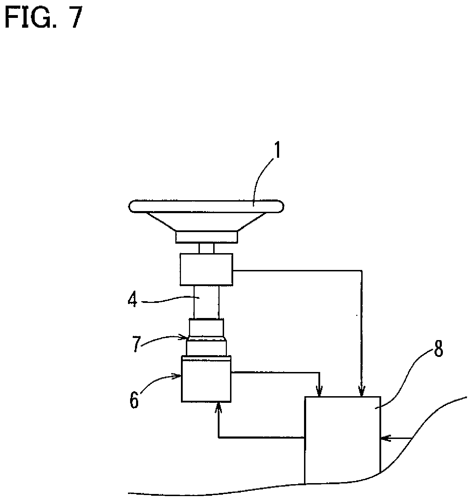

In the example of Fig. 2, the brake unit 7, which includes the outer ring 21, the engagement elements 24, the cage 25 and the non-excited operation type electromagnetic brake 27, is disposed on the side of the reaction force motor 6 axially opposite/remote from the steering wheel 1, but as shown in Fig. 7, the brake unit 7 may be disposed between the steering wheel 1 and the reaction force motor 6. If the brake unit 7 is disposed as in the example of Fig. 7, it is only required that the motor shaft 16 shown in Fig. 1 be disposed to protrude upward beyond the reaction force motor 6; a through hole be additionally formed in the brake case 28 so as to be axially opposed to the inner ring shaft portion 60; the brake unit 7 be mounted on the side of the reaction force motor 6 close to the steering wheel 1, i.e., the reaction force motor 6 and the brake unit 7 shown in Fig. 1 be inverted in the vertical direction; and the inner ring shaft portion 60 be coupled to the shaft portion of the shaft 4 on the side of the steering column.

As described above, this steering system is a steer-by-wire type steering system including (see Figs. 1 to 7 as necessary) a steering wheel 1; a steering sensor 5 that detects the operation amount of the steering wheel 1; a steering actuator 2 that changes the direction of the steered wheels 3 as steered parts, according to the operation amount of the steering wheel 1 detected by the steering sensor 5; a shaft 4 coupled to the steering wheel 1 so as to rotate in unison with the steering wheel 1; an outer ring 21 having an inner periphery disposed around the shaft 4; engagement elements 24 disposed between the shaft 4 and the inner periphery of the outer ring 21; a cage 25 that retains the engagement elements 24, and that is circumferentially movable relative to the shaft 4, between an engagement position where the engagement elements 24 are engaged with the shaft 4 and the inner periphery of the outer ring 21, and a disengagement position where the engagement elements 24 are disengaged from the shaft 4 and the inner periphery of the outer ring 21; a centering spring 26 that elastically retains the cage 25 at the disengagement position, and that is rotationally fixed to the shaft 4 and the cage 25 so as to rotate in unison with the shaft 4; and a non-excited operation type electromagnetic brake 27 that brakes the cage 25. With this arrangement, when the non-excited operation type electromagnetic brake 27 is switched to the excited state so as not to brake the cage 25, the centering spring 26, which is rotationally fixed to the shaft 4 so as to rotate in unison with the shaft 4, transmits the rotational force of the shaft 4 to the cage 25, and retains the cage 25 at the disengagement position relative to the shaft 4, so that the engagement elements 24 cannot engage with the shaft 4 and the inner periphery of the outer ring 21, and rotation of the steering wheel 1 is allowed. On the other hand, when the non-excited operation type electromagnetic brake 27 is switched to the non-excited state so as to brake the cage 25, even if the steering wheel 1 is turned, since the non-excited operation type electromagnetic brake 27 brakes the cage 25 to which the rotational force of the shaft 4 is transmitted from the centering spring 26, when the shaft 4 rotates relative to the cage 25, and the cage 25 moving circumferentially relative to the shaft 4 reaches the engagement position against the centering spring 26, the engagement elements 24 are engaged with the shaft 4 and the inner periphery of the outer ring 21, thereby reliably preventing further rotation of the shaft 4. When the non-excited operation type electromagnetic brake 27 is switched from the non-excited state to the excited state, the cage 25 is returned to the disengagement position by the elastic restoring force of the centering spring 26.

Thus, for this steering system, by switching the non-excited operation type electromagnetic brake 27 from the excited state to the non-excited state, it is possible to reliably prevent rotation of the steering wheel 1 beyond the circumferential movement range of the cage 25 between the engagement position and the disengagement position. Also, it is possible to make the driver reliably perceive, through the steering wheel 1, that the direction of the steered wheels 3 has reached the stroke end.

The circumferential movement amount of the cage 25 between the disengagement position and the engagement position can be set suitably based on the engagement elements 24 and the dimensional setting of the wedge-shaped spaces defined by the respective cam surfaces 22 and the cylindrical surface 23, and the engagement elements 25. Therefore, if the circumferential movement amount of the cage 25 between the disengagement position and the engagement position is small, and thus the state of the brake unit 7 becomes the locked state quickly, it is possible to reduce the amount of rotation of the steering wheel 1 allowed after the control unit 8 switches the non-excited operation type electromagnetic brake 27 from the excited state to the non-excited state. In such a case, even if the control unit 8 switches the non-excited operation type electromagnetic brake 27 from the excited state to the non-excited state when determining that the direction of the steered wheel 3 has reached the stroke end, there will be no practical problems. For example, the circumferential movement amount of the cage 25 between the disengagement position and the engagement position can be set to not more than 10 degrees when considered as the rotation angle of the cage 25 between the disengagement position and the engagement position.

Also, if rotation of the steering wheel 1 is allowable by a predetermined amount of rotation after the control unit 8 switches the non-excited operation type electromagnetic brake 27 from the excited state to the non-excited state, when the control unit 8 determines that the direction of the steered wheels 3 has reached a predetermined stroke position, the non-excited operation type electromagnetic brake 27 may be switched from the excited state to the non-excited state. The predetermined stroke position may be set such that after switching the non-excited operation type electromagnetic brake 27 from the excited state to the non-excited state, rotation of the steering wheel 1 is allowed by a predetermined amount of rotation corresponding to the circumferential movement amount of the cage 25 between the engagement position and the disengagement position, and when the direction of the steered wheels 3 reaches the stroke end by turning the steering wheel 1 by the predetermined amount of rotation such that the directions of the steered wheels 3 changes accordingly, the cage 25 reaches the engagement position.

Irrespective of whether the timing of switching the non-excited operation type electromagnetic brake 27 from the excited state to the non-excited state is set to when the control unit 8 determines that the direction of the steered wheels 3 has reached the stroke end, or set to when the control unit 8 determines that the direction of the steered wheels 3 has reached the predetermined stroke position as described above, the resistance when the centering spring 26 elastically deforms during movement of the cage 25 from the disengagement position to the engagement position is applied to the shaft 4, and this resistance increases as the cage 25 approaches the engagement position. Due to this increasing resistance, the driver needs to turn the steering wheel 1 more strongly. Due to this, the driver perceives that the direction of the steered wheels 3 is now near the stroke end.

Also in this steering system, while the non-excited operation type electromagnetic brake 27 is in the non-excited state, the rolling elements 24 engage with the shaft 4 and the inner periphery of the outer ring 21 by turning of the steering wheel 1, thereby reliably blocking rotation of the shaft 4. Therefore, even while no electric power is being supplied to the non-excited operation type electromagnetic brake 27 and the control unit 8, the steering wheel 1 can be locked. Due to this, even if, e.g., the driver accidentally touches the steering wheel 1 when boarding or leaving the vehicle, the steering wheel 1 is not turned, and thus the positional relationship between the steering wheel 1 and the steered wheels 3 is not displaced.

Also, this steering system includes a non-excited operation type electromagnetic brake 27 including a friction member 50 that is rotationally fixed to the cage 25, and that is axially movable relative to the cage 25; a friction surface portion 51 that is axially opposed to the friction member 50, and that is stationary relative to the shaft 4; an electromagnet 52; an armature 53 axially opposed to the electromagnet 52; and an actuation spring 54 disposed such that when the electromagnet 52 is not excited, the actuation spring 54 biases the friction member 50 so as to be pressed against the friction surface portion 51, and such that when the electromagnet 52 is excited, the pressing of the friction member 50 weakens according to axial movement of the armature 53 attracted to the electromagnet 52. Therefore, in the non-excited state in which the electromagnet 52 is not energized, the friction member 50 is axially pressed against the friction surface portion 51 by the biasing force of the actuation spring 54 so as to apply actuation pressure between the friction member 50 and the friction surface portion 51, thereby making it possible to brake the cage 25, and circumferentially move the cage 25 relative to the shaft 4. On the other hand, when the electromagnet 52 is switched from the non-excited state to the excited state, the pressing of the friction member 50 is weakened by axial movement of the armature 53 attracted, so that the braking of the cage 25 by the friction surface portion 51 and the friction member 50 is released. Due to this, when the electromagnet 52 is excited, it is possible to prevent the armature 53 from circumferentially sliding on the electromagnet 52, and prevent an increase in the magnetic gap due to wear of the electromagnet 52 and the armature 53.

Also in this steering system, the actuation spring 54 is disposed such that when the electromagnet 52 is not excited, the actuation spring 54 supports the armature 53 at a position axially away from the electromagnet 52, and biases, via the armature 53, the friction member 50 toward the friction surface portion 51. Therefore, when the electromagnet 52 is not excited, the friction member 50 is pressed against the friction surface portion 51 by the biasing force of the actuation spring 54 via the armature 53, and a predetermined magnetic gap can be generated between the armature 53 and the electromagnet 52 by the support of the actuation spring 54. Also, when the electromagnet 52 is switched from the excited state to the non-excited state, the armature 53 can be returned to the position of the predetermined magnetic gap by the elastic restoring force of the actuation spring 54. Due to this, it is not necessary to provide, separately from the actuation spring 54, a return spring for separating the electromagnet 52 and the armature 53 from each other. Therefore, it is possible to reduce the number of parts of the non-excited operation type electromagnetic brake 27.

Also in this steering system, since the friction surface portion 51 is formed on the end surface of the outer ring 21, it is not necessary to provide the friction surface portion 51 as a part exclusively for braking. Therefore, it is possible to reduce the cost of the non-excited operation type electromagnetic brake 27.

Also, this steering system includes a tubular brake case 28 in which the non-excited operation type electromagnetic brake 27 and the outer ring 21 are received, and which is a non-magnetic member provided separately from the outer ring 21, and the outer ring 21 is rotationally fixed to the brake case 28. Therefore, when the non-excited operation type electromagnetic brake 27 is switched to the excited state, it is possible to prevent the magnetic flux generated from the non-excited operation type electromagnetic brake 27 from leaking to the brake case 28. Therefore, it is possible to reduce the size of the non-excited operation type electromagnetic brake 27.

Also, in this steering system, a reaction force motor 6 is further provided that applies a steering reaction force to the steering wheel 1, the steered parts are the right and left steered wheels 3, and the outer ring 21, the engagement elements 24, the cage 25 and the non-excited operation type electromagnetic brake 27 are located between the steering wheel 1 and the reaction force motor 6, or located on the side of the reaction force motor 6 axially opposite/remote from the steering wheel 1. Therefore, as a steer-by-wire type steering system for a vehicle, this steering system enables the driver to reliably perceive, via the steering wheel 1, that the direction of the steered wheels 3 has reached the stroke end. Also in this steering system, the steering wheel 1 is locked when the driver parks and leaves the vehicle, thereby preventing the vehicle from being stolen.

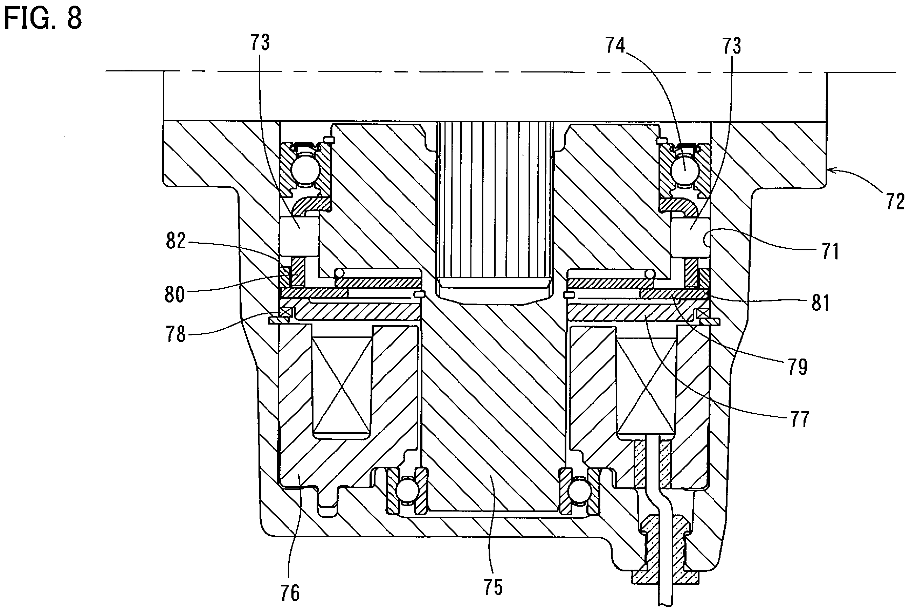

Fig. 8 shows the second embodiment of the present invention. Only the features of the second embodiment that are different from those of the first embodiment are described below. With respect to the elements of the second embodiment corresponding to those of the first embodiment, the same element names are used.

In the steering system of the second embodiment, the outer ring 71 is formed integrally with the brake case 72. The portion of the inner periphery of the brake case 72 that functions as the outer ring 71 has a cylindrical surface with which the engaging element 73 are engaged. The bearing 74 is disposed between the inner ring 75 and the inner periphery of the brake case 72. The inner peripheral portion of the brake case 72 extending from the open end of the brake case 72 to the electromagnet 76, and having the cylindrical surface has an increased inner diameter compared to the first embodiment, and the dimensions of respective parts such as the outer diameters of the electromagnet 76, the armature 77, the actuation spring 78, the friction member 79 and the cage 80 and the pitch circle diameter of the engagement elements 73 are increased corresponding to the above increased inner diameter. Due to this, a non-excited operation type electromagnetic brake including the electromagnet 76, the armature 77, etc. can be inserted into the brake case 72 through the opening of the brake case 72. On the other hand, because the end surface of the outer ring cannot be used as the friction surface portion as in the first embodiment, a ring member 82 provided separately from the outer ring 71 and the brake case 72 is used as the friction surface portion 81, and is fixed to the inner periphery of the brake case 72.

Since the steering system of the second embodiment includes a tubular brake case 72 in which the non-excited operation type electromagnetic brake 27 is received, and the outer ring 71 is formed integrally with the brake case 72, it is possible to omit the step of axially positioning the outer ring 71 relative to the brake case 72 with e.g., a snap ring, and the step of rotationally fixing the outer ring 71 to the brake case 72 with, e.g., a key.

While, in each of the above embodiments, rollers are exemplified as the engagement elements, balls or sprags may be used instead.

While, in each of the above embodiments, the motor case of the reaction force motor and the brake case are separate members, these cases may be formed integrally.

While, in each of the above embodiments, the friction surface portion, against which the friction member is pressed, is constituted by a separate member such as the outer ring or the ring member, which is fixed to the brake case, the brake case may have a divided structure such that the friction surface portion is formed as a portion of the brake case.

While, in each of the above embodiments, a steer-by-wire type steering system for a vehicle is excited, the present invention is also applicable to a steer-by-wire type steering system for a ship including a rudder as a steered part.

The above-described embodiments are mere examples in every respect, and the present invention is not limited thereto. The scope of the present invention is indicated not by the above description but by the claims, and should be understood to include all modifications within the meaning and scope equivalent to the scope of the claims.

### DESCRIPTION OF THE NUMERALS

1: Steering wheel
2: Steering actuator
3: Steered wheel (steered part)
4: Shaft
5: Steering sensor
6: Reaction force motor
16: Motor shaft
20, 75: Inner ring
21, 71: Outer ring
22: Cam surface
23: Cylindrical surface
24, 73: Engagement element
25, 80: Cage
26: Centering spring
27: Non-excited operation type electromagnetic brake
28, 72: Brake case
33: Key member
39: Extended portion
41: Radial groove
42: Cage groove
50, 79: Friction member
51, 81: Friction surface portion
52, 76: Electromagnet
53, 77: Armature
54, 78: Actuation spring

## Claims

1. A steer-by-wire type steering system comprising:
a steering wheel;
a steering sensor configured to detect an operation amount of the steering wheel; and
a steering actuator configured to change a direction of at least one steered part based on the operation amount of the steering wheel detected by the steering sensor,
**characterized in that** the steer-by-wire type steering system further comprises:
a shaft coupled to the steering wheel so as to rotate in unison with the steering wheel;
an outer ring having an inner periphery disposed around the shaft;
engagement elements disposed between the shaft and the inner periphery of the outer ring;
a cage retaining the engagement elements, and disposed to be circumferentially movable between an engagement position where the engagement elements are engaged with the shaft and the inner periphery of the outer ring, and a disengagement position where the engagement elements are disengaged from the shaft and the inner periphery of the outer ring;
a centering spring that elastically retains the cage at the disengagement position, and that is rotationally fixed to the shaft and the cage so as to rotate in unison with the shaft; and
a non-excited operation type electromagnetic brake configured to brake the cage.

2. The steer-by-wire type steering system according to claim 1, wherein the non-excited operation type electromagnetic brake comprises:
a friction member rotationally fixed to the cage, and disposed to be axially movable relative to the cage;
a friction surface portion that is axially opposed to the friction member, and that is stationary relative to the shaft;
an electromagnet;
an armature axially opposed to the electromagnet; and
an actuation spring disposed such that when the electromagnet is not excited, the actuation spring biases the friction member so as to be pressed against the friction surface portion, and such that when the electromagnet is excited, pressing of the friction member weakens according to axial movement of the armature attracted to the electromagnet.

3. The steer-by-wire type steering system according to claim 2, wherein the actuation spring is disposed such that when the electromagnet is not excited, the actuation spring supports the armature at a position axially away from the electromagnet, and biases, via the armature, the friction member toward the friction surface portion.

4. The steer-by-wire type steering system according to claim 2 or 3, wherein the friction surface portion is formed on an end surface of the outer ring.

5. The steer-by-wire type steering system according to any one of claims 1 to 4, further comprising a tubular brake case in which the outer ring and the non-excited operation type electromagnetic brake are received,
wherein the brake case is a non-magnetic member provided separately from the outer ring, and
wherein the outer ring is rotationally fixed to the brake case.

6. The steer-by-wire type steering system according to any one of claims 1 to 4, further comprising a tubular brake case in which the non-excited operation type electromagnetic brake is received,
wherein the outer ring is formed integrally with the brake case.

7. The steer-by-wire type steering system according to any one of claims 1 to 6, further comprising a reaction force motor for applying a steering reaction force to the steering wheel,
wherein the at least one steered part comprises a pair of right and left steered wheels, and
wherein the outer ring, the engagement elements, the cage and the non-excited operation type electromagnetic brake are located between the steering wheel and the reaction force motor, or located on a side of the reaction force motor axially opposite from the steering wheel.
